# EUROPEAN PATENT APPLICATION

(11) **EP 1 892 541 A1**
(43) Date of publication of application: **27.02.2008**
(21) Application number: 07013473.9
(22) Date of filing: 10.07.2007
(51) Int. Cl.: G01S 17/02, B60R 21/015

(54) **Photographing system, vehicle occupant detection system, operation device controlling system, and vehicle**

(30) Priority: 24.08.2006 JP 2006227846
(71) Applicant: TAKATA CORPORATION, Minato-ku, Tokyo 106-8510 (JP)
(72) Inventor: Aoki, Hiroshi, Tokyo 106-8510 (JP); Yokoo, Masato, Tokyo 106-8510 (JP); Hakomori, Yuu, Tokyo 106-8510 (JP)
(74) Representative: Banzer, Hans-Jörg

(57) **Abstract**

In order to provide a technology which is effective for precisely detecting photographed images of a plurality of objects, in an object detection system (100) as a photographing system of the present invention, reflected light reflected by a plurality of objects, i.e. an object (A) and an object (B), are allowed to enter into a distance measuring imaging chip (116) through an optical system (114), whereby produced images of the object (A) and the object (B) are entirely or partially superposed on each other on a predetermined imaging area (116a) of the distance measuring imaging chip (116). In addition, the object detection system (100) is adapted to individually select between a state that only the object (A) is projected to the imaging area (116a) and a state that only the object (B) is projected to the imaging area (116a) by a shading filter (118).

## Description

The present invention relates to a technology for developing a photographing system obtaining photographs of a plurality of objects.

### Background of the Invention

Conventionally, there are known techniques for detecting an object occupying a vehicle seat by using a photographing means such as a camera. For example, disclosed in JP-A-2003-294855 is a configuration of an occupant detecting apparatus in which a single camera arranged in front of a vehicle occupant is used to detect the position of the vehicle occupant.

### Disclosure of the Invention

### Problems to be solved by the Invention

By the way, in such a case of using a camera to detect information about a vehicle occupant like the occupant detecting apparatus disclosed in the aforementioned JP-A-2003-294855, it is known that the vehicle occupant detection accuracy is deteriorated when the viewing angle of the camera is increased, for example, over 90° because the nearer the lens periphery the smaller the light quantity for producing an image within the imaging area of an imaging chip through an optical lens and, in addition, the distortion of a produced image within the imaging area of the imaging chip is increased at the peripheral range as compared to the central range. Thus, for detecting both vehicle occupants on a driver seat and a front passenger seat at once, it is necessary to use an expensive lens which has more brightness and has reduced distortion aberration or to use a plurality of cameras, leading to increase in cost of the apparatus. In case of using a 3D camera to detect distance information of a vehicle occupant in order to obtain detailed information of the vehicle occupant such as position, posture, physique, and action, it is difficult to precisely detect desired information because deterioration of accuracy or variation of accuracy about detection of distance relative to the vehicle occupant easily occur. Such problems occur not only in a camera installed in a vehicle for photographing a plurality of objects in a vehicle cabin but also in a camera for photographing a plurality of objects outside a vehicle and also in a camera for photographing a plurality of objects in a situation not related to automobile. Therefore, in design of detecting systems of this type, there is a demand for technology which is effective for precisely detecting desired information about a plurality of objects.

The present invention is made in view of the aforementioned point and it is an object of the present invention to provide a technology which is effective for precisely detecting photographed images of a plurality of objects.

### Means to solve the Problems

According to the present invention, this object is achieved by a photographing systems as defined in claim 1, a vehicle occupant detection system as defined in claim 4, an operation device controlling system as defined in claim 6 or a vehicle as defined in claim 7. The dependent claims define preferred and advantageous embodiments of the invention.

For achieving the object, the present invention is configured. Though the present invention is typically adapted to a photographing system in an automobile for obtaining photographed images of a plurality of objects on vehicle seats, the present invention can be also adapted to a photographing system for obtaining photographed images of a plurality of objects in a vehicle other than the automobile, such as an airplane, a boat, a train, and a bus, or in a situation not related to vehicle.

The photographing system of the invention is a system for obtaining photographed images of a plurality of objects and comprises at least a first irradiating means, a second irradiating means, a driving means, a photographing means, a shading means, and a processing means. The "object" here used widely includes a vehicle occupant, an object placed on a vehicle seat, a child seat, and a junior seat and various objects in a situation not related to a vehicle.

The first irradiating means of this invention is structured as a means for emitting irradiating light to a first object and, on the other hand, the second irradiating means of this invention is structured as a means for emitting irradiating light to a second object which is different from the first object. These irradiating means are sometimes called "light emitting means" or "illuminating means".

The driving means of this invention is structured as a means for driving the first irradiating means and the second irradiating means to switch between a first operating mode in which the light quantity of the first irradiating means is larger than that of the second irradiating means and a second operating mode in which the light quantity of the second irradiating means is larger than that of the first irradiating means. That is, in this invention, the first operating mode or the second operating mode is exclusively and alternatively selected. Specific examples of the first operating mode are a state of actuating the respective irradiating means to emit lights such that the quantity of irradiating light of the first irradiating means is larger than the quantity of irradiating light of the second irradiating means and a state of actuating the first irradiating means to emit light and turning off the second irradiating means not to emit light. On the other hand, specific examples of the second operating mode are a state of actuating the respective irradiating means to emit lights such that the quantity of irradiating light of the second irradiating means is larger than the quantity of irradiating light of the first irradiating means and a state of actuating the second irradiating means to emit light and turning off the first irradiating means not to emit light.

The actuation timing of the driving means in the first operating mode or the second operating mode and the switching timing for selecting one of the first operating mode or the second operating mode are controlled typically by a control unit mounted on the driving means itself or a control means provided separately from the driving means.

The photographing means of this invention has an optical system and an imaging chip to project images of the first object and the second object, entirely or partially superposed on each other, onto a predetermined imaging area of the imaging chip by allowing the reflected lights reflected at the respective objects, i.e. the first object and the second object, to enter into the imaging chip through the optical system. The "optical system" used here is a means for achieving optical function and is structured as an optical unit comprising a lens, a group of lenses, a prism, a mirror, or another optical element having a configuration capable of reflecting or deflecting light. The optical system is sometimes called an imaging system for contributing to image production. The "imaging chip" used here includes a 3D imaging chip (distance measuring imaging chip) for obtaining three-dimensional images and a 2D imaging chip for obtaining two-dimensional images.

A part of incident lights entering into the imaging chip is blocked by the shading means. The image projected to the predetermined imaging area of the imaging chip is outputted as image information by the processing means of this invention. The processing means has an image processing function of controlling the camera to obtain good quality images and controlling the image processing for processing photographed images to be used for analysis and a function of storing (recording) an operation control software, data for correction, buffer frame memory for preprocessing, defined data for recognition computing, and reference patterns.

In this invention, when the driving means is in the first operating mode, the shading means blocks light of which quantity is lower than that of the incident light which is emitted from the first irradiating means and reflected at the first object to enter into the imaging chip. That is, in case of the first operating mode in which the quantity of light of the first irradiating means is larger than that of the second irradiating means, light, of which quantity is lower than that of the irradiating light from the first irradiating means, such as ambient light (natural light or sun light) and the irradiating light from the second irradiating means is blocked by the shading means and is thus prevented from entering into the imaging chip. Therefore, in the first operating mode, only the first object is projected to the predetermined imaging area of the imaging chip. Then, based on information that the driving means is in the first operating mode, the processing means outputs an image projected to the predetermined imaging area of the imaging chip as image information about the first object. Therefore, in the first operating mode, information about the first object is obtained.

On the other hand, when the driving means is in the second operating mode, the shading means blocks light of which quantity is lower than that of the incident light which is emitted from the second irradiating means and reflected at the second object to enter into the imaging chip. That is, in case of the second operating mode in which the quantity of light of the second irradiating means is larger than that of the first irradiating means, light, of which quantity is lower than that of the irradiating light from the second irradiating means, such as ambient light (natural light or sun light) and the irradiating light from the first irradiating means is blocked by the shading means and is thus prevented from entering into the imaging chip. Therefore, in the second operating mode, only the second object is projected to the predetermined imaging area of the imaging chip. Then, based on information that the driving means is in the second operating mode, the processing means outputs an image projected to the predetermined imaging area of the imaging chip as image information of the second object.

According to the arrangement of the photographing system of the invention, the predetermined imaging area of the imaging chip of the photographing means is used such that at least two focuses are formed on the common imaging area. In addition, the state that only the first object is projected to the imaging area and the state that only the second object is projected to the imaging area can be independently formed, whereby the common imaging area can be shared as the projecting areas of at least two objects. Therefore, this arrangement cures or avoids occurrence of decrease in brightness and distortion aberration at the periphery of the optical lens composing the optical system, thus allowing development of a miniaturized high-precision optical system. Therefore, the necessity for use of an expensive lens which has more brightness and has reduced distortion aberration or for use of a plurality of cameras can be avoided, thereby reducing the cost of the apparatus.

This invention can be applied for obtaining photographed images of at least two objects. This invention can be applied to a case for obtaining photographed images of three or more objects, if necessary. For this arrangement, a photographing means can be used which allows reflected lights reflected at a plurality of objects to enter into an imaging chip through a optical system such that images of the plurality of objects, entirely or partially superposed on each other, are projected to a predetermined area of the imaging chip.

In the photographing system of the invention, the driving means in the first operating mode may actuate only the first irradiating means to emit irradiating light and the driving means in the second operating mode may actuate only the second irradiating means to emit irradiating light.

This arrangement of the photographing system allows such a control of turning on or turning off the respective irradiating means, thereby simplifying the control as compared to the case that the respective irradiating means have a function of varying the light quantity.

According to an embodiment of the invention, the photographing system is structured as a vehicular photographing system to be installed in a vehicle. The "vehicle" used here includes various vehicles such as an automobile, an airplane, a boat, a train, a bus, and a truck.

The first irradiating means of this invention emits irradiating light to a first vehicle occupant as the first object and the second irradiating means emits irradiating light to a second vehicle occupant as the second object.

The photographing means of this invention is adapted to project images of the first vehicle occupant and the second vehicle occupant, entirely or partially superposed on each other, onto the predetermined imaging area by allowing reflected light reflected at the respective vehicle occupants, i.e. the first vehicle occupant and the second vehicle occupant, to enter into the imaging chip through the optical system.

In this invention, when the driving means in the first operating mode, the shading means blocks light of which quantity is lower than that of the incident light which is emitted from the first irradiating means and reflected at the first vehicle occupant to enter into the imaging chip and, based on information that the driving means is in the first operating mode, the processing means outputs an image projected to the predetermined imaging area of the imaging chip as image information about the first vehicle occupant.

On the other hand, when the driving means is in the second operating mode, the shading means blocks light of which quantity is lower than that of the incident light which is emitted from the second irradiating means and reflected at the second vehicle occupant to enter into the imaging chip and, based on information that the driving means is in the second operating mode, the processing means outputs an image projected to the predetermined imaging area of the imaging chip as image information of the second vehicle occupant.

The actuation timing of the light source in the first operating mode or the second operating mode is typically set to a timing when it is detected that an occupant gets on the vehicle, that is, specifically when it is detected that a seat belt buckle for the vehicle seat is latched or when it is detected by a weight sensor of a vehicle seat that an occupant sits in the vehicle seat. The switching timing for selecting one of the first operating mode and the second operating mode is suitably set based on a preset time schedule.

The arrangement of the vehicular photographing system cures or avoids occurrence of decrease in brightness and distortion aberration at the periphery of the optical lens composing the optical system in the vehicle, thus allowing development of a miniaturized high-precision optical system. Therefore, this arrangement is effective for precisely detecting a plurality of vehicle occupants at once. Especially in case that the photographing means is disposed in a limited space such as a vehicle, it is difficult to precisely detect both vehicle occupants on a driver seat and a front passenger seat, for example. This invention is very effective for solving such a problem.

A vehicle occupant detection system of the invention comprises at least a detecting means in addition to the photographing system mentioned above. The detecting means of this invention is structured as a means for detecting information about the vehicle occupant such as physique, position, or posture of the vehicle occupant, based on the image information about either the first vehicle occupant or the second vehicle occupant outputted by the processing means of the photographing system. The information about the vehicle occupant detected by the detecting means is suitably used for control of an occupant restraining means, such as an airbag device, a seat belt device, and a warning device (for outputting display, sound and so on).

According to the arrangement of the vehicle occupant detection system of the invention, information about the vehicle occupant can be precisely detected.

An operation device controlling system of the invention comprises at least: a vehicle occupant detection system as mentioned above, an operation device which is operated based on the information about the vehicle occupant detected by the detecting means of the vehicle occupant detection system; and a control means for controlling the actuation of the operation device. The operation device of this invention may include a warning apparatus for outputting warning signals, an apparatus for restraining an occupant such as an airbag and a seat belt, and the like.

Therefore, according to the arrangement of the operation device controlling system of the invention, the actuation of the operation device is controlled in a suitable mode corresponding to the detection results of the information about the vehicle occupant by the vehicle occupant detection system. Accordingly, the fine control of the operation device is achieved.

A vehicle of the invention comprises at least: an engine/running system; an electrical system; an actuation control device; and a vehicle occupant information detecting device. The engine/running system is a system involving an engine and a running mechanism of the vehicle. The electrical system is a system involving electrical parts used in the vehicle. The actuation control device is a device having a function of conducting the actuation control of the engine/running system and the electrical system. The vehicle occupant information detecting device is a device for detecting information about a vehicle occupant on a vehicle seat such as physique, position, or posture of the vehicle occupant. In this invention, the vehicle occupant information detecting device comprises a vehicle occupant detection system as mentioned above.

According to this arrangement, there is provided a vehicle mounted with a vehicle occupant detection system capable of precisely detecting information about a vehicle occupant on a vehicle seat by a photographing means.

### Effects of the Invention

As described above, according to the present invention, a photographing system obtaining photographed images of a plurality of objects employs a photographing means allowing reflected light reflected at respective objects such as a first object and a second object to enter into an imaging chip through a optical system such that images of the first object and the second object, entirely or partially superposed on each other, are projected to a predetermined area of the imaging chip and employs an arrangement of independently forming a state that only the first object is projected to the imaging area and a state that only the second object is projected to the imaging area through a shading means, thereby precisely detecting photographed images of a plurality of objects.

### Brief Explanation of the drawings

Fig. 1 is an illustration showing an object detection system 100 to be installed in a vehicle according to an embodiment.

Fig. 2 is an illustration schematically showing a state of obtaining images by using the object detection system 100 of the embodiment.

Fig. 3 is an illustration showing the state of an imaging area 116a of a distance measuring imaging chip 116 in a camera 112 of the embodiment.

Fig. 4 is an illustration showing the state of the imaging area 116a of the distance measuring imaging chip 116 in the camera 112 of the embodiment.

Fig. 5 is a flow chart of an "image information selecting control" in the object detection system 100 of the embodiment.

Fig. 6 is an illustration schematically showing an object detection system 300 with an optical system 314 of another embodiment.

### Best Modes for carrying out the Invention

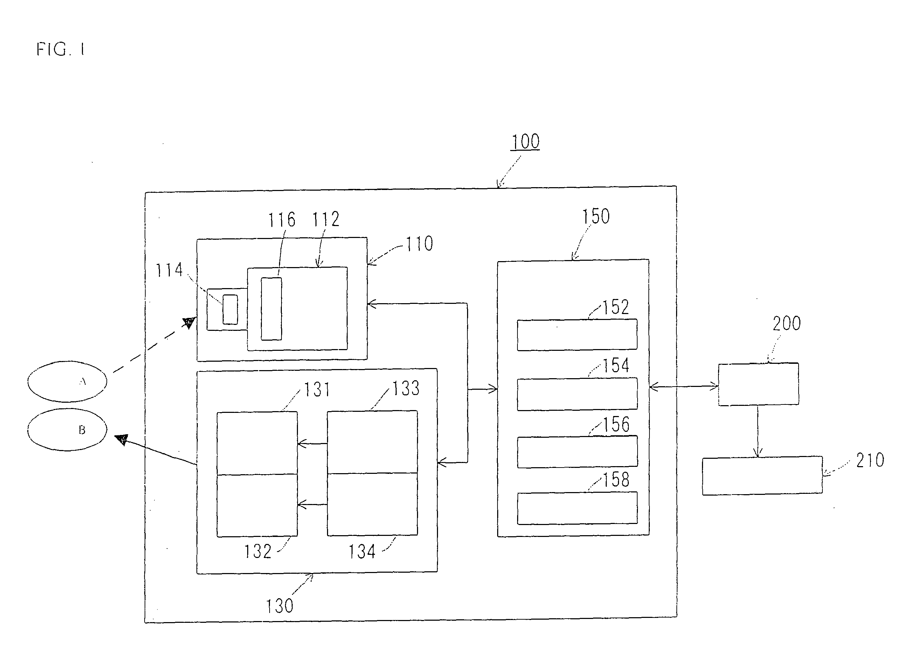

Hereinafter, description will be made as regard to an object detection system 100 as an embodiment of "photographing system", "vehicle occupant detection system", or "vehicle occupant information detection device" of the present invention with reference to Fig. 1 through Fig. 5.

The configuration of an object detection system 100, which is installed in a vehicle, of this embodiment is schematically shown in Fig. 1.

The object detection system 100 of this embodiment is installed in an automobile as the "vehicle" of the present invention for detecting information about objects in a vehicle cabin such as vehicle occupants. As shown in Fig. 1, the object detection system 100 mainly comprises a photographing unit 110, an illuminating unit 130, and a control/calculation unit 150.

Further, the object detection system 100 cooperates together with an ECU 200 as an actuation control device for the vehicle and an occupant restraining means 210 to compose the "occupant restraining apparatus" for restraining a vehicle occupant in the event of a vehicle collision. The vehicle comprises, but not shown, an "engine/running system" involving an engine and a running mechanism of the vehicle, an "electrical system" involving electrical parts used in the vehicle, and an "actuation control device (ECU 200)" for conducting the actuation control of the engine/running system and the electrical system.

The photographing unit 110 of this embodiment comprises a camera 112 as the photographing device and a data transfer circuit (not shown). The camera 112 is a 3-D (three-dimensional) camera (sometimes called "monitor") of a CCD (charge-coupled device) type in which light sensors are arranged into an array (lattice) arrangement. The camera 112 comprises an optical system 114 and a distance measuring imaging chip 116. The optical system 114 in this embodiment is a means for achieving optical function and is structured as an optical unit comprising a lens, a group of lenses, a prism, a mirror, or another optical element having a configuration capable of reflecting or deflecting light. The optical system 114 is sometimes called an imaging system for contributing to image production. The distance measuring imaging chip 116 is structured as so-called "3D imaging chip" such as a CCD (charge-coupled device) chip for a 3D camera. Light incident on the distance measuring imaging chip 116 through the optical system 114 produces an image on a predetermined imaging area ("imaging area 116a" as will be described later) of the distance measuring imaging chip 116. The optical system 114 corresponds to the "optical system" of the present invention and the distance measuring imaging chip 116 corresponds to the "imaging chip" of the present invention.

By the camera 112 having the aforementioned structure, information about distance relative to an object A and an object B is measured a plurality of times to detect a three-dimensional surface profile which is used to identify the presence or absence, the size, the position, and the posture of each object. Also by the camera 112, information about light quantity or brightness of light incident on the distance measuring imaging chip 116 through the optical system 114 is detected. The principle of the camera 112 is a system in which distance from an object is measured by measuring the time required for light to return, i.e. the phase difference (time delay) between emitted light and reflected light returned from the object when the object is irradiated with modulated near-infrared light, that is, so-called TOF (Time of flight) system. As the camera 112, a 3-D type monocular C-MOS camera or a 3-D type pantoscopic stereo camera may be employed. The photographing unit 110 composes the "photographing means" of the present invention.

The camera 112 of this embodiment is mounted, in a suitable embedding manner, to an area around an inner rearview mirror, an area around a side mirror, a central portion in the lateral direction of a dashboard, or the like of the automobile in such a manner as to face one or a plurality of vehicle seats. By using the camera 112, information about object(s) on one or more of vehicle seats such as a driver seat, a front passenger seat, and a rear seat is measured periodically a plurality of times. Mounted on the object detection system 100 of this embodiment is a power source unit for supplying power from a vehicle buttery to the camera 112, but not particularly illustrated. The camera 112 is set to start its photographing operation, for example, when the ignition key is turned ON or when a seat sensor (not shown) installed in the driver seat detects a vehicle occupant sitting in the driver seat.

The illuminating unit 130 of this embodiment comprises at least: a first light source 131 and a second light source 132, a first driving unit 133 and a second driving unit 134. The first light source 131 is driven by the first driving unit 133 and the second light source 132 is driven by the second driving unit 134. The first light source 131 and the second light source 132 are adapted to irradiate the object(s) with modulated near-infrared light. The first driving unit 133 and the second driving unit 134 are structured as devices for driving the first light source 131 and the second light source 132 to act as mentioned above. Lights emitted from the first light source 131 and the second light source 132 and reflected by the object(s) are distributed to the camera 112. Particularly in this embodiment, the location and orientation of the first light source 131 and the second light source 132 are arranged such that the first light source 131 emits irradiating light to a vehicle occupant on the driver seat and the second light source 132 emits irradiating light to a vehicle occupant on the front passenger seat. The first light source 131 used here corresponds to the "first irradiating means" of the present invention and the second light source 132 corresponds to the "second irradiating means" of the present invention.

The first driving unit 133 and the second driving unit 134 are adapted to be controlled by the control/calculation unit 150 and drive the respective light sources based on control signal from the control/calculation unit 150. The first driving unit 133 and the second driving unit 134 may be separate driving units or a single driving unit. Alternatively, the first driving unit 133 and the second driving unit 134 may be provided with control function themselves. The first driving unit 133 for driving the first light source 131 and the second driving unit 134 for driving the second light source 132 compose the "driving means" of the present invention.

The control/calculation unit 150 of this embodiment further comprises at least an image processing means 152, a computing means (MPU) 154, a storing means 156, an input/output means 158, and peripheral devices (not shown). The control/calculation unit 150 is a means for processing images projected to the predetermined imaging area of the distance measuring imaging chip 116 by the camera 112 to be outputted as image information and for deriving information about the object(s) on the driver seat and the front passenger seat based on the images. The control/calculation unit 150 corresponds to the "processing means" of the present invention.

The image processing means 152 is a means for controlling the camera to obtain good quality images and for controlling the image processing for processing images taken by the camera 112 to be used for analysis. Specifically, as for the control of the camera, the adjustment of the frame rate, the shutter speed, and the sensitivity, and the accuracy correction are conducted to control the dynamic range, the brightness, and the white balance. As for the control of the image processing, the spin compensation for image, the correction for distortion of the lens, the filtering operation, and the difference operation as image preprocessing operations are conducted and the configuration determination and the trucking as image recognition processing operations are conducted.

The computing means 154 carries out a process of extracting information about the object based on the information form the image processing means 152. Specifically, information about the presence, the size, the position, and the posture of the object are extracted (derived). When the object is a vehicle occupant, the presence of a vehicle occupant, the size (physique class) of the vehicle occupant, the positions of the occupant's head, shoulder, and upper body, and whether the occupant is out-of-position (OOP) are extracted (derived).

The storing means 156 is a means for storing (recording) data for correction, buffer frame memory for preprocessing, defined data for recognition computing, reference patterns, and the computed results of the computing means 154 a well as an operation control software.

The input/output means 158 inputs information about the vehicle, information about traffic conditions around the vehicle, information about weather condition and about time zone, and the like to the ECU 200 for conducting controls of the entire vehicle and outputs recognition results. As the information about the vehicle, there are, for example, the state (open or closed) of a vehicle door, the wearing state of the seat belt, the operation of brakes, the vehicle speed, and the steering angle. In this embodiment, based on the information outputted from the input/output means 158, the ECU 200 outputs actuation control signals to the occupant restraining means 210 as an actuation target. As the occupant restraining means 210, there is, for example, an apparatus for restraining an occupant by such as an airbag and a seat belt. The occupant restraining means 210 corresponds to the "operation device" of the present invention. The ECU 200 for controlling the actuation of the occupant restraining means 210 corresponds to the "control means" of the present invention. Therefore, the arrangement of the object detection system 100 plus the ECU 200 and the occupant restraining means 210 corresponds to the "operation device control system" of the present invention. In addition to the occupant restraining means 210 as an embodiment of the operation device or instead of the occupant restraining means 210, the actuation of a warning device for outputting warning signals (display, sound and so on) may be controlled by the ECU 200.

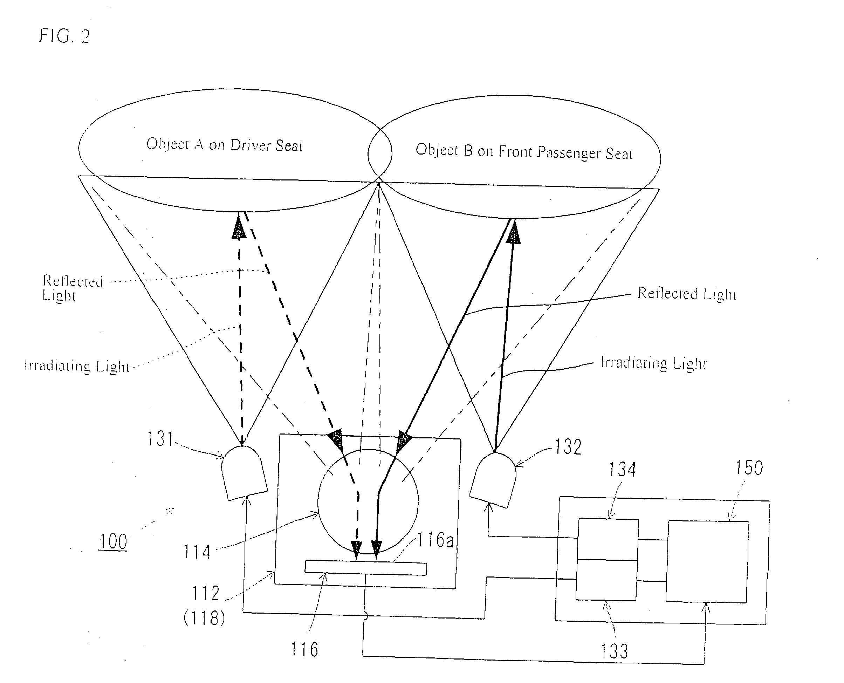

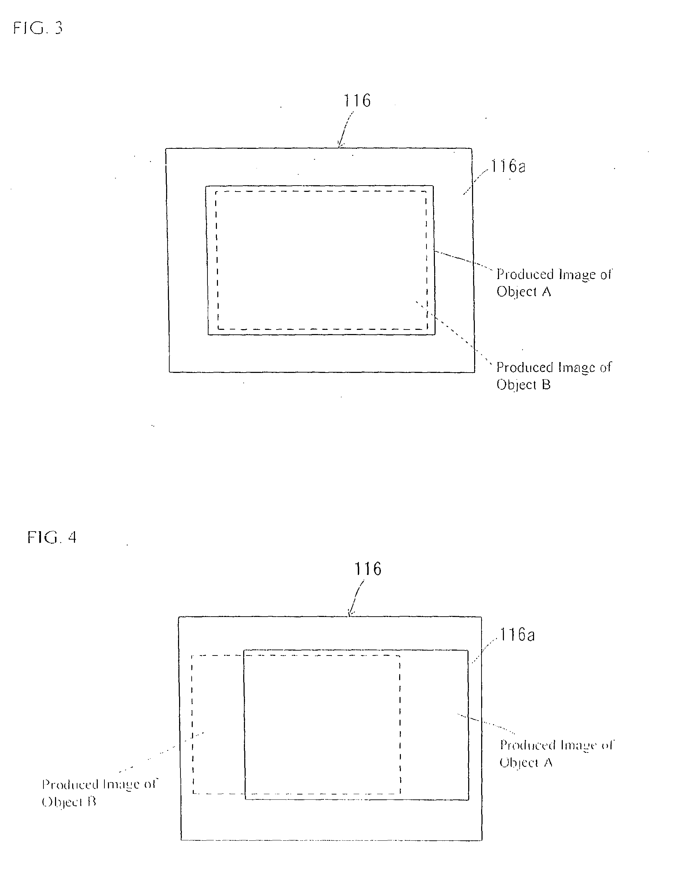

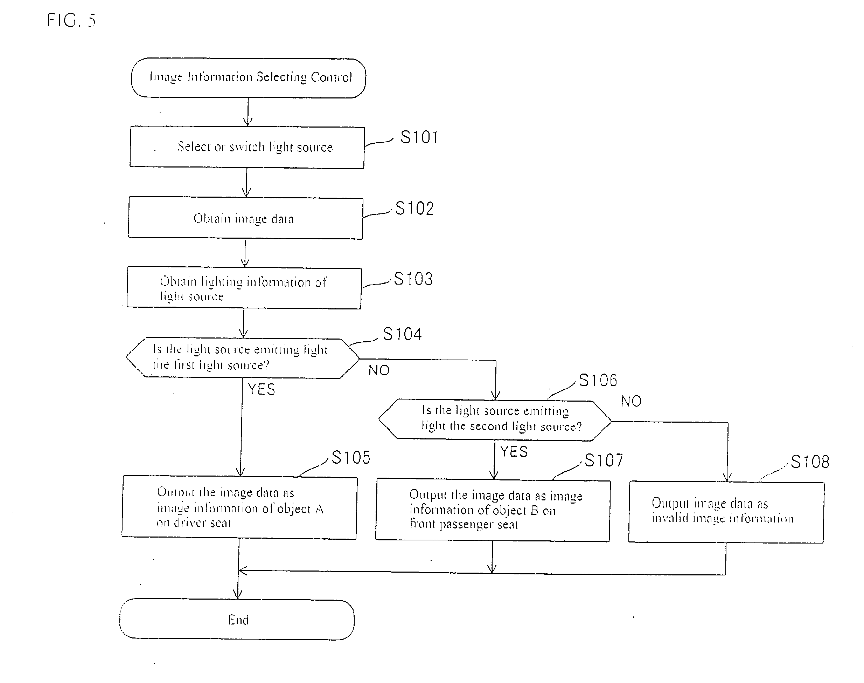

Hereinafter, the action of the object detection system 100 having the aforementioned structure will be specifically described with reference to Fig. 2 through Fig. 5. Fig. 2 schematically shows a state that photographed images are obtained by the object detection system 100 of this embodiment, and Fig. 3 and Fig. 4 show the state of the imaging area 116a of the distance measuring imaging chip 116 in the camera 112 of this embodiment.

As shown in Fig. 2, irradiating light from the first light source 131 and other ambient light (natural light or sunlight) are reflected by an object A on the driver seat and the reflected lights can enter into the distance measuring imaging chip 116 through the optical system 114. On the other hand, irradiating light from the second light source 132 and other ambient light (natural light or sunlight) are reflected by an object B on the front passenger seat and the reflected lights can enter into the distance measuring imaging chip 116 through the optical system 114. The object A used here includes a vehicle occupant and other objects occupying the driver seat. The object A corresponds to the "first object" of the present invention. The object B used here includes a vehicle occupant and other objects occupying the front passenger seat. The object B corresponds to the "second object" of the present invention.

In this embodiment, light reflected by the respective objects, i.e. the object A and the object B, enter into the distance measuring imaging chip 116 through the optical system 114 and are introduced to the imaging area 116a (sometimes called "focal plane") of the distance measuring imaging chip 116 where the light is projected as images in which the object A and the object B are entirely or partially superposed on each other. That is, the camera 112 of this embodiment can photograph the object A and the object B such that they are superposed on the common imaging area of the distance measuring imaging chip 116, that is, the camera 112 is structured to have two focuses of the object A and the object B on the imaging area. The images of the object A and the object B at the imaging area 116a of the distance measuring imaging chip 116 may be substantially entirely superposed on each other as shown in Fig. 3 or partially superposed on each other as shown in Fig. 4. The imaging area 116a corresponds to the "predetermined imaging area" of the present invention.

The camera of this embodiment is provided with a shading filter 118 for blocking a part of incident lights. The shading filter 118 is a light blocking means which blocks ("shades" or "cuts") lights in the state that the first and second light sources emit no light (sometimes referred to as "non-emitting state"), i.e. ambient light (natural light or sunlight) other than light emitted from the light sources, to a level not to allow the distance measuring imaging chip 116 to detect such ambient light when the first light source 131 or the second light source 132 is in the light emitting state (sometimes referred to as "lighting state" or " irradiating state"). The shading filter 118 corresponds to the "shading means" of the present invention.

By using the shading filter 118, when the first light source 131 is in the light emitting state and the second light source 132 is in the non-emitting state (corresponding to the "first operating condition" of the present invention), two images of the object A and the object B which are produced by ambient light (natural light or sunlight) under normal circumstances are not detected by the distance measuring imaging chip 116 and only an image of the object A produced by irradiating light from the first light source 131 is detected by the distance measuring imaging chip 116 (hereinafter, referred to as "control mode A"). Similarly, when the second light source 132 is in the light emitting state and the first light source 131 is in the non-emitting state (corresponding to the "second operating condition" of the present invention), two images of the object A and the object B which are produced by ambient light (natural light or sunlight) under normal circumstances are not detected by the distance measuring imaging chip 116 and only an image of the object B produced by irradiating light from the second light source 132 is detected by the distance measuring imaging chip 116 (hereinafter, referred to as "control mode B").

In case of photographing vehicle occupants by using a camera like the photographing unit 110, it is known that the detection accuracy is deteriorated because the brightness of the optical system is decreased as the viewing angle of the camera is increased, for example, over 90° and that a peripheral area of the lens is distorted as compared to a central area of the lens. Thus, for detecting both vehicle occupants on a driver seat and a front passenger seat at once, it is necessary to use an expensive lens which has more brightness and has reduced distortion aberration or to use a plurality of cameras, leading to increase in cost of the apparatus. In case of using a 3D camera to detect distance information of a vehicle occupant in order to obtain detailed information of the vehicle occupant such as position, posture, physique, and action, it is difficult to precisely detect desired information because deterioration of accuracy or variation of accuracy about detection of distance relative to the vehicle occupant easily occur.

For this, the photographing unit 110 of this embodiment is adapted to form two focuses of the object A and the object B on the common imaging area 116a of the distance measuring imaging chip 116 of the camera 112 and is adapted such that only information about an image of the object A is detected when the first light source 131 is in the light emitting state and only information about an image of the object B is detected when the second light source 132 is in the light emitting state. In this case, the focuses of the object A and the object B may be substantially entirely superposed on each other as shown in Fig. 3 or partially superposed on each other as shown in Fig. 4. This arrangement corresponds to "to project images of the first object and the second object, entirely or partially superposed on each other, onto a predetermined imaging area of the imaging chip by allowing the reflected lights reflected by the respective objects, i.e. the first object and the second object, to enter into the imaging chip through the optical system" and "to project images of the first vehicle occupant and the second vehicle occupant, entirely or partially superposed on each other, onto the predetermined imaging area by allowing reflected lights reflected at the respective vehicle occupants, i.e. the first vehicle occupant and the second vehicle occupant, to enter into the imaging chip through the optical system".

According to the photographing unit 110 of this embodiment, two focuses of the object A and the object B can be formed on the imaging area 116a of the distance measuring imaging chip 116. In addition, the state that only the object A is projected to the imaging area 116a and the state that only the object B is projected to the imaging area 116a can be independently formed, whereby the common imaging area 116a can be shared as the projecting area for the object A and the projecting area for the object B. Therefore, this arrangement cures occurrence of decrease in brightness and distortion aberration at the periphery of the optical lens composing the optical system, thus allowing development of a miniaturized high-precision optical system. Therefore, the necessity for use of an expensive lens which has more brightness and has reduced distortion aberration or for use of a plurality of cameras can be avoided, thereby reducing the cost of the apparatus. In case that the area of the imaging chip is divided into two areas to be used for the driver seat side and the front passenger seat side, an imaging chip having pixels of which number is twice is required, leading to increase in cost. The photographing unit 110 of this embodiment can solve such problems and thus has a cost advantage.

Fig. 5 is a flow chart of an "image information selecting control" in the object detection system 100 of this embodiment.

At step S101 in Fig. 5, a light source is selected from the first light source 131 and the second light source 132 or switched between them. Specifically, based on the control signal from the control/calculation unit 150, the first driving unit 133 and the second driving unit 134 are controlled to exclusively and alternatively select the control mode from the control mode A in which the first light source 131 is set in the light emitting state and the second light source 132 is set in the non-emitting state and the control mode B in which the first light source 131 is set in the non-emitting state and the second light source 132 is set in the light emitting state. The actuation timing of the light source in the control mode A or the control mode B is typically set to a timing when it is detected that an occupant gets on the vehicle, that is, specifically when it is detected that a seat belt buckle for the vehicle seat is latched or when it is detected by a weight sensor of a vehicle seat that an occupant sits in the vehicle seat. The switching timing for selecting one of the control mode A and the control mode B is suitably set based on a preset time schedule.

In the control mode A, only the first light source 131 is set in the light emitting state so that only light emitted from the first light source 131 and reflected by the object A is allowed to enter into the distance measuring imaging chip 116 through the optical system 114 because of the shading function of the shading filter 118. Therefore, in the control mode A, only the object A is projected to the imaging area of the distance measuring imaging chip 116. On the other hand, in the control mode B, only the second light source 132 is set in the light emitting state so that only light emitted from the second light source 132 and reflected by the object B is allowed to enter into the distance measuring imaging chip 116 through the optical system 114 because of the shading function of the shading filter 118. Therefore, in the control mode B, only the object B is projected to the imaging area of the distance measuring imaging chip 116.

Then, at step S 102 in Fig. 5, a process for obtaining image data is conducted. In case that the control mode A is set at step S101, image data of the object A projected on the imaging area of the distance measuring imaging chip 116 is obtained. On the other hand, in case that the control mode B is set at step S101, image data of the object B projected on the imaging area of the distance measuring imaging chip 116 is obtained. That is, when the object of which image data is expected to be obtained is the object A on the driver seat, the control mode A in which only the first light source 131 is in the light emitting state is set. When the object of which image data is expected to be obtained is the object B on the front passenger seat, the control mode B in which only the second light source 132 is in the light emitting state is set. The setting result is stored in the storing means 156 of the control/calculation unit 150.

At step S 103 in Fig. 5, a process for obtaining lighting information of the light source by reading out the information stored in the storing means 156 of the control/calculation unit 150. Step S103 is followed by step S104 where it is determined whether or not the light source which emits light is the first light source 131. When it is determined that the light source emitting light is the first light source 131 (Yes in step S 104), the procedure proceeds to step S 105. When not, that is, it is determined that the light source emitting light is the second light source 132 (No in step S104), the procedure proceeds to step S 106.

At step S105, it is determined that the image data obtained at step S 102 is for the object A on the driver seat and the image data is outputted as image information of the object A. Then, the image information selecting control is terminated.

The arrangement at step S105 corresponds to "when the driving means is in the first operating mode, the shading means blocks light of which quantity is lower than that of the incident light which is emitted from the first irradiating means and reflected at the first object to enter into the imaging chip and, based on the operation mode of the driving means, the processing means outputs an image projected to the predetermined imaging area of the imaging chip as image information about the first object" and "when the driving means in the first operating mode, the shading means blocks light of which quantity is lower than that of the incident light which is emitted from the first irradiating means and reflected at the first vehicle occupant to enter into the imaging chip and, based on the operation mode of the driving means, the processing means outputs an image projected to the predetermined imaging area of the imaging chip as image information about the first vehicle occupant".

At step S106, it is further determined whether or not the light source which emits light is the second light source 132. When it is determined that the light source emitting light is the second light source 132 (Yes in step S106), the procedure proceeds to step S107. When not, that is, it is determined that the light source emitting light is neither the first light source 131 nor the second light source 132 (No in step S106), the procedure proceeds to step S108 where it is determined that the image data is invalid and the image information selecting control is terminated. At step S107, it is determined that the image data obtained at step S 102 is for the object B on the front passenger seat and the image data is outputted as image information of the object B. Then, the image information selecting control is terminated.

The arrangement at step S 107 corresponds to "when the driving means is in the second operating mode, the shading means blocks light of which quantity is lower than that of the incident light which is emitted from the second irradiating means and reflected at the second object to enter into the imaging chip and, based on the operation mode of the driving means, the processing means outputs an image projected to the predetermined imaging area of the imaging chip as image information of the second object" and "when the driving means is in the second operating mode, the shading means blocks light of which quantity is lower than that of the incident light which is emitted from the second irradiating means and reflected at the second vehicle occupant to enter into the imaging chip and, based on the operation mode of the driving means, the processing means outputs an image projected to the predetermined imaging area of the imaging chip as image information of the second vehicle occupant".

In this manner, the image information of the object A on the driver seat and the object B on the front passenger seat can be precisely detected by the respective steps in the aforementioned image information selecting control. In this case, the distance from the camera 112 to the object A or the object B is obtained by measuring the time required for light to return i.e. the phase difference (time delay) between emitted light from the first light source 131 or the second light source 132 and reflected light as light reflected by and returned from the object. This measurement is conducted a plurality of times for each object so as to detect a three-dimensional surface profile of the object, thereby outputting various information such as the presence or absence, the size, the position, and the posture of the object. Based on the various information about the object, the ECU 200 outputs an actuation control signal to the occupant restraining means 210 so as to restrain a vehicle occupant on the driver seat or the front passenger seat by a suitable arrangement. Accordingly, the fine control of the occupant restraining means 210 is achieved.

Further, according to this embodiment, there is provided a vehicle with an object detection system 100 capable of precisely detecting information about an object on a vehicle seat by using the photographing unit 110.

Though the aforementioned embodiment has been described with regard to a case using a 3D (three-dimensional) camera as the camera 112, the present invention allows to use a 2D camera for obtaining two-dimensional images instead of the camera 112. For applying this case in Fig. 2, among the components in the object detection system 100, the distance measuring imagining chip 116 which is a 3D imaging chip is replaced with a 2D imaging chip and the respective modulation functions for modulating near-infrared light of the first light source 131 and the second light source 132, the first driving unit 133 and the second driving unit 134 are omitted. This arrangement also cures occurrence of decrease in brightness and distortion aberration at the periphery of the optical lens composing the optical system, thus allowing development of a miniaturized high-precision optical system. It should be noted that, by the arrangement of using the camera with the 2D imaging chip, information such as the presence or absence, the outline, and the contour is outputted as the information about the object.

### Another embodiments

The present invention is not limited to the aforementioned embodiments and various applications and modifications may be made. For example, the following respective embodiments based on the aforementioned embodiments may be carried out.

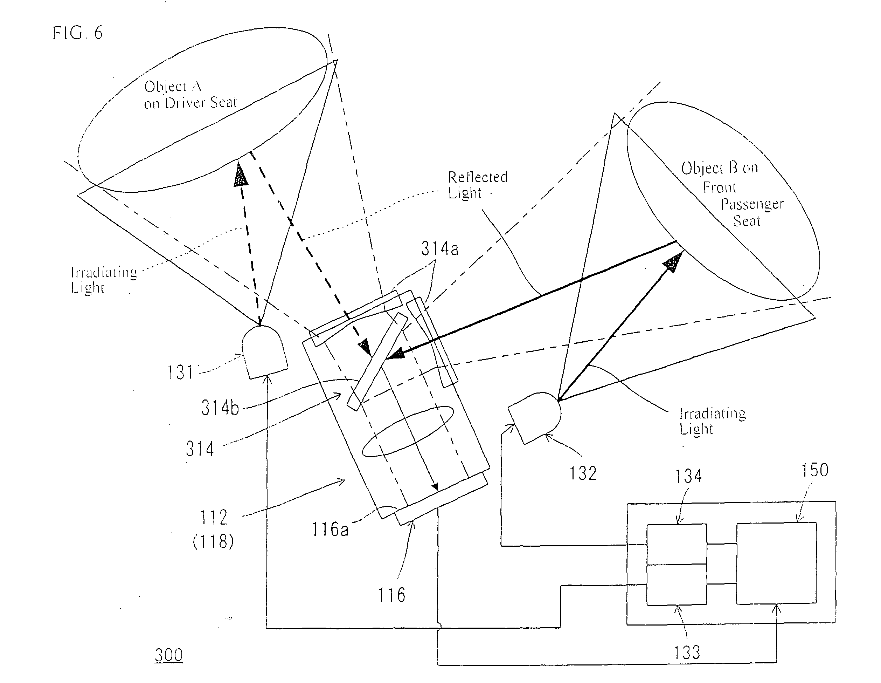

In the present invention, another arrangement different from the optical system 114 shown in Fig. 2 may be employed. Fig. 6 schematically shows an object detection system 300 with an optical system 314 according to another embodiment.

The object detection system 300 shown in Fig. 6 has the same structure as that of the aforementioned object detection system 100 except the optical system 314. The optical system as the "optical system" of the present invention comprises a half mirror 314b and plano-concave lenses 314a, 314a which are each disposed between the half mirror 314b and the object A on the driver seat or the object B on the front passenger seat and each have a concavity on the side facing the half mirror 314b. One plano-concave lens 314a is arranged to face the object A on the driver seat and the other plano-concave lens 314a is arranged to face the object B on the front passenger seat. The half mirror 314b is adapted to allow the reflected light from the object A on the driver seat to transmit to the distance measuring imaging chip 116 and to reflect the reflected light from the object B on the front passenger seat toward the distance measuring imaging chip 116. By using the optical system 314 having the aforementioned structure, a viewing field wider than that of the object detection system 100 is ensured. Thus, even when the driver seat or the front passenger seat is moved or the seat back is reclined, the object A and the object B are surely projected to the common imaging area 116a of the distance measuring imaging chip 116, thereby ensuring acquisition of desired information.

Though the aforementioned embodiments have been described with regard to a case for obtaining photographed images of two objects, i.e. the object A on the driver seat and the object B on the front passenger seat, the present invention can be applied to a case for obtaining photographed images of three or more objects, if necessary.

Though the aforementioned embodiments have been described with regard to a case that the second light source 132 is set in the non-emitting state in case of detecting information of image about the object A on the driver seat and the first light source 131 is set in the non-emitting state in case of detecting information of image about the object B on the front passenger seat, the present invention can employ a control method not setting the respective light sources in the non-emitting state. For example, for detecting information of image about the object A on the driver seat, the second light source 132 is set to emit light weaker than that of the first light source 131. For detecting information of image about the object B on the front passenger seat, the first light source 131 is set to emit light weaker than that of the second light source 132. Such a control method can be employed.

In the present invention, the object to be detected through the camera 112 includes a vehicle occupant on a rear seat, an object placed on a vehicle seat, a child seat, and a junior seat, and a plurality of objects in a situation not related to a vehicle, as well as the vehicle occupant on the driver seat and the vehicle occupant on the front passenger seat. In this case, information about the object includes information about the presence, the size, the position, the distance, the posture, and the movement of the object, and the light quantity or brightness of incident light (distributed light) relative to the object.

Though the aforementioned embodiment has been described with regard to the arrangement of the object detection system to be installed in an automobile, the present invention can be adopted to object detection systems to be installed in various vehicles such as an automobile, an airplane, a boat, a train, a bus, and a truck, and object detection systems for detecting a plurality of objects inside or outside other than automobiles.

## Claims

1. A photographing system for obtaining photographed images of a plurality of objects, comprising:
a first irradiating means (131) for emitting irradiating light to a first object (A);
a second irradiating means (132) for emitting irradiating light to a second object (B) which is different from the first object (A);
a driving means (133, 134) for driving the first irradiating means (131) and the second irradiating means (132) to switch between a first operating mode in which the light quantity of the first irradiating means (131) is larger than that of the second irradiating means (132) and a second operating mode in which the light quantity of the second irradiating means (132) is larger than that of the first irradiating means (131);
a photographing means (110) which has an optical system (114; 314) and an imaging chip (116) to project images of the first object (A) and the second object (B), entirely or partially superposed on each other, onto a predetermined imaging area (116a) of the imaging chip (116) by allowing a reflected light reflected at the first object (A) and/or the second object (B), to enter into the imaging chip (116) through the optical system (114; 314);
a shading means (118) for blocking a part of incident light entering into the imaging chip (116); and
a processing means (150) for outputting an image projected on the predetermined imaging area (116a) as image information, wherein
when the driving means (133, 134) is in the first operating mode, the shading means (118) blocks light of which quantity is lower than that of the incident light which is emitted from the first irradiating means (131) and reflected at the first object (A) to enter into the imaging chip (116) and, based on the operation mode of the driving means (133, 134), the processing means (150) outputs an image projected to the predetermined imaging area (116a) of the imaging chip (116) as image information about the first object (A), and
on the other hand, when the driving means (133, 134) is in the second operating mode, the shading means (118) blocks light of which quantity is lower than that of the incident light which is emitted from the second irradiating means (132) and reflected at the second object (B) to enter into the imaging chip (116) and, based on the operation mode of the driving means (133, 134), the processing means (150) outputs an image projected to the predetermined imaging area (116a) of the imaging chip (116) as image information of the second object (B).

2. A photographing system as claimed in claim 1, wherein
the driving means (133) in the first operating mode actuates only the first irradiating means (131) to emit irradiating light and the driving means (134) in the second operating mode actuates only the second irradiating means (132) to emit irradiating light.

3. A photographing system as claimed in claim 1 or 2, wherein
the photographing system is structured as a vehicular photographing system to be installed in a vehicle;
the first irradiating means (131) emits irradiating light to a first vehicle occupant (A) as the first object and the second irradiating means (132) emits irradiating light to a second vehicle occupant (B), different from the first vehicle occupant (A), as the second object;
the photographing means (110) is adapted to project images of the first vehicle occupant (A) and the second vehicle occupant (B), entirely or partially superposed on each other, onto the predetermined imaging area (116a) by allowing reflected light reflected at the respective vehicle occupants (A, B), i.e. the first vehicle occupant (A) and the second vehicle occupant (B), to enter into the imaging chip (116) through the optical system (114; 314);
when the driving means (133, 134) in the first operating mode, the shading means (118) blocks light of which quantity is lower than that of the incident light which is emitted from the first irradiating means (131) and reflected at the first vehicle occupant (A) to enter into the imaging chip (116) and, based on the operation mode of the driving means (133, 134), the processing means (150) outputs an image projected to the predetermined imaging area (116a) of the imaging chip (116) as image information about the first vehicle occupant (A), and
on the other hand, when the driving means (133, 134) is in the second operating mode, the shading means (118) blocks light of which quantity is lower than that of the incident light which is emitted from the second irradiating means (132) and reflected at the second vehicle occupant (B) to enter into the imaging chip (116) and, based on the operation mode of the driving means (133, 134), the processing means (150) outputs an image projected to the predetermined imaging area (116a) of the imaging chip (116) as image information of the second vehicle occupant (B).

4. A vehicle occupant detection system comprising:
a photographing system as claimed in claim 3, and
a detecting means for detecting information about the first vehicle occupant (A) or the second vehicle occupant (B), based on the image information about either the first vehicle occupant (A) or the second vehicle occupant (B) outputted by the processing means (150) of the photographing system.

5. A vehicle occupant detection system as claimed in claim 4, wherein the information about the first vehicle occupant (A) or the second vehicle occupant (B) is at least one information of a group of information consisting of
information about a physique of the first vehicle occupant (A) or the second vehicle occupant (B),
information about a position of the first vehicle occupant (A) or the second vehicle occupant (B), and
information about a posture of the first vehicle occupant (A) or the second vehicle occupant (B).

6. An operation device controlling system comprising:
a vehicle occupant detection system (100; 300) as claimed in claim 4 or 5;
an operation device (210) which is operated based on the information about the first vehicle occupant (A) and/or the second vehicle occupant (B) detected by the detecting means of the vehicle occupant detection system (100; 300); and
a control means (200) for controlling the actuation of the operation device (210).

7. A vehicle comprising an engine/running system; an electrical system; an actuation control device (200) for conducting the actuation control of the engine/running system and the electrical system; and a vehicle occupant information detecting device for detecting information about a vehicle occupant (A; B) on a vehicle seat such as physique, position, or posture of the vehicle occupant (A; B), wherein
the vehicle occupant information detecting device comprises a vehicle occupant detection system (100; 300) as claimed in claim 4 or 5.
